# EUROPEAN PATENT APPLICATION

(11) **EP 3 270 593 A2**
(43) Date of publication of application: **17.01.2018**
(21) Application number: 16765194.2
(22) Date of filing: 10.03.2016
(51) Int. Cl.: H04N 19/159, H04N 19/176, H04N 19/96

(54) **METHOD OF PROCESSING VIDEO SIGNAL AND DEVICE FOR SAME**

(30) Priority: 13.03.2015 US 201562132520 P
(71) Applicant: LG Electronics Inc., Yeongdeungpo-gu Seoul 07336 (KR)
(72) Inventor: PARK, Seungwook, Seoul 06772 (KR); SON, Eunyong, Seoul 06772 (KR); JEON, Yongjoon, Seoul 06772 (KR); KOO, Moonmo, Seoul 06772 (KR)
(74) Representative: Katérle, Axel
(86) International application number: PCT/KR2016/002407
(87) International publication number: WO 2016/148438

(57) **Abstract**

The present invention relates to a method for decoding a bitstream for a video signal, and a device for same, and to a method including the steps of: obtaining dividing mode information, which orders a dividing technique for a current block, from the bitstream, the dividing technique including a first technique in which the current block is not divided, a second technique in which the current block is divided in a vertical direction into 2 blocks, a third technique in which the current block is divided in a horizontal direction into 2 blocks, and a fourth technique in which the current block is divided in vertical and horizontal directions into 4 blocks; obtaining prediction mode information for the current block from the bitstream and decoding the current block on the basis of the prediction mode information, when the dividing mode information orders the first technique; and repeatedly dividing the current block when the dividing mode information orders the second technique, the third technique, or the fourth technique. The present invention relates to a device for said method.

## Description

### TECHNICAL FIELD

The present invention relates to video processing, and more specifically, relates to a method and apparatus for processing a video signal using a recursively partitioning in a tree structure.

### BACKGROUND ART

In accordance with the rapid development of a digital video processing technology, a digital multimedia service using various media such as high-definition digital broadcasting, digital multimedia broadcasting, internet broadcasting and the like has been activated. As the high-definition digital broadcasting becomes common, various service applications have been developed and high-speed video processing techniques for video images of high quality and high definition are required. To this end, standards for coding video signals such as H.265 / HEVC (High Efficiency Video Coding) and H.264 / AVC (Advanced Video Coding) have been actively discussed.

### DISCLOSURE OF THE INVENTION

### TECHNICAL TASKS

One technical task of the present invention is to provide a method for efficiently processing a video signal and an apparatus therefor.

Another technical task of the present invention is to provide a method for increasing coding efficiency in recursively/repeatedly partitioning a basic processing unit of a picture into a processing unit having the same prediction mode applied thereto and an apparatus therefor.

Still another technical task of the present invention is to provide a method for signaling information for efficiently partitioning a basic processing unit of a picture into a processing unit having the same prediction mode applied thereto and an apparatus therefor.

Technical tasks obtainable from the present invention are non-limited by the above-mentioned technical task. And, other unmentioned technical tasks can be clearly understood from the following description by those having ordinary skill in the technical field to which the present invention pertains.

### TECHNICAL SOLUTIONS

In a first aspect of the present invention, provided herein is a method for decoding a bitstream for a video signal by a decoding device, the method comprising:
obtaining partition mode information indicating a partitioning scheme of a current block from the bitstream, the partitioning scheme including a first scheme of not partitioning the current block, a second scheme of partitioning the current block into 2 blocks in a vertical direction, a third scheme of partitioning the current block into 2 blocks in a horizontal direction, and a fourth scheme of partitioning the current block into 4 blocks in vertical and horizontal directions; when the partition mode information indicates the first scheme, obtaining prediction mode information for the current block from the bitstream, the prediction mode information indicating whether the current block is coded using an intra prediction mode or an inter prediction mode, and decoding the current block based on the prediction mode information; when the partition mode information indicates one of the second to fourth schemes, partitioning the current block into at least 2 blocks, and obtaining partition mode information for each of the at least 2 blocks from the bitstream.

In a second aspect of the present invention, provided herein is a decoding device configured to decode a bitstream for a video signal, the decoding device comprising: a memory; and a processor operatively connected to the memory, wherein the processor is configured to: obtain partition mode information indicating a partitioning scheme of a current block from the bitstream, the partitioning scheme including a first scheme of not partitioning the current block, a second scheme of partitioning the current block into 2 blocks in a vertical direction, a third scheme of partitioning the current block into 2 blocks in a horizontal direction, and a fourth scheme of partitioning the current block into 4 blocks in vertical and horizontal directions; when the partition mode information indicates the first scheme, obtain prediction mode information for the current block from the bitstream, the prediction mode information indicating whether the current block is coded using an intra prediction mode or an inter prediction mode, and decode the current block based on the prediction mode information; and when the partition mode information indicates one of the second to fourth schemes, partition the current block into at least 2 blocks, and obtain partition mode information for each of the at least 2 blocks from the bitstream.

Preferably, when the partition mode information indicates the second scheme, partitioning the current block into the at least 2 blocks comprises: obtaining minimum partition unit information indicating a minimum partition unit from the bitstream, obtaining partition position information indicating an offset from a reference position of the current block from the bitstream, determining a partition boundary based on the minimum partition unit information and the partition position information, and partitioning the current block into 2 blocks including a top block and a bottom block.

Preferably, the partition boundary is determined from a product of a value indicated by the minimum partition unit information and a value indicated by the partition position information.

Preferably, the top block and the bottom block have a same horizontal size as the current block.

Preferably, the reference position corresponds to a vertical coordinate of a top left corner sample of the current block.

Preferably, when the partition mode information indicates the third scheme, partitioning the current block into the at least 2 blocks comprises: obtaining minimum partition unit information indicating a minimum partition unit from the bitstream, obtaining partition position information indicating an offset from a reference position of the current block from the bitstream, determining a partition boundary based on the minimum partition unit information and the partition position information, and partitioning the current block into 2 blocks including a left block and a right block.

Preferably, the partition boundary is determined from a product of a value indicated by the minimum partition unit information and a value indicated by the partition position information.

Preferably, the reference position corresponds to a vertical coordinate of a top left corner sample of the current block.

Preferably, when the partition mode information indicates the fourth scheme, partitioning the current block into the at least 2 blocks comprises: obtaining minimum partition unit information indicating a minimum partition unit from the bitstream, obtaining a first partition position information indicating a first offset from a reference position of the current block from the bitstream, determining a first partition boundary based on the minimum partition unit information and the first partition position information, obtaining a second partition position information indicating a second offset from the reference position of the current block from the bitstream, determining a second partition boundary based on the minimum partition unit information and the second partition position information, and partitioning the current block into 4 blocks based on the first partition boundary and the second partition boundary.

Preferably, the first partition boundary is determined from a product of a value indicated by the minimum partition unit information and a value indicated by the first partition position information, and wherein the second partition boundary is determined from a product of the value indicated by the minimum partition unit information and a value indicated by the second partition position information.

Preferably, the reference position includes vertical and horizontal coordinates of a top left corner sample of the current block.

Preferably, when the prediction mode information indicates that the current block is coded in the intra prediction ode, decoding the current block comprises: partitioning the current block into at least one transform block, obtaining a prediction value by performing intra prediction on the at least one transform block, and reconstructing the at least one transform block based on the obtained prediction value.

Preferably, when the prediction mode information indicates that the current block is coded in the inter prediction ode, decoding the current block comprises: partitioning the current block into at least one prediction block, obtaining inter prediction information on the at least one prediction block, obtaining a prediction value by performing inter prediction based on the obtained inter prediction information, partitioning the current block into at least one transform block, obtaining residual information on the at least one transform block, and reconstructing the current block based on the obtained prediction value and the obtained residual information.

Preferably, when the partition mode information indicates one of the second to fourth schemes, the method further comprises recursively performing the decoding or the partitioning on each of the at least 2 blocks based on the partition mode information on each of the at least 2 blocks.

### ADVANTAGEOUS EFFECTS

According to the present invention, a video signal can be efficiently processed.

Further, according to the present invention, coding efficiency can be increased in recursively/repeatedly partitioning a basic processing unit of a picture into a processing unit having the same prediction mode applied thereto.

Further, according to the present invention, information can be signaled through a bitstream so as to efficiently partition a basic processing unit of a picture into a processing unit having the same prediction mode applied thereto.

Effects obtainable from the present invention are non-limited by the above mentioned effect. And, other unmentioned effects can be clearly understood from the following description by those having ordinary skill in the technical field to which the present invention pertains.

### DESCRIPTION OF DRAWINGS

The accompanying drawings, which are included to provide a further understanding of the invention, illustrate embodiments of the invention and together with the description serve to explain the principle of the invention.
FIG. 1 illustrates an encoding procedure.
FIG. 2 illustrates a decoding procedure.
FIG. 3 is a diagram showing one example of partitioning a coding tree block by a quadtree scheme.
FIG. 4 is a flowchart of a partitioning method according to the present invention.
FIG. 5 shows one example of a coding tree block partitioned by a binary tree scheme.
FIG. 6 shows a coding tree block partitioned using a hybrid tree scheme.
FIG. 7 shows one example of an asymmetric quadtree scheme according to the present invention.
FIG. 8 shows one example of a center position for an asymmetric quadtree scheme.
FIG. 9 exemplarily shows various modes for an asymmetric quadtree scheme.
FIG. 10 shows one example of a partitioning method for a rectangular tree block according to the present invention.
FIG. 11 shows one example of a coding tree block partitioned by a partitioning method according to the present invention.
FIG. 12 shows one example of a partitioning scheme based on partition mode information according to the present invention.
FIG. 13 shows an example of a partition offset based on minimum partition unit information according to the present invention.
FIG. 14 shows one example of a partition boundary determined according to the present invention.
FIG. 15 shows one example of a syntax for a partitioning method according to the present invention.
FIG. 16 illustrates a block diagram to which the present invention can be applied.

### BEST MODE FOR INVENTION

A technology described in the following can be used for an image signal processing device configured to encode and/or decode a video signal. Generally, a video signal corresponds to an image signal or a sequence of pictures capable of being recognized by eyes. Yet, in the present specification, the video signal can be used for indicating a sequence of bits representing a coded picture or a bit stream corresponding to a bit sequence. A picture may indicate an array of samples and can be referred to as a frame, an image, or the like. More specifically, the picture may indicate a two-dimensional array of samples or a two-dimensional sample array. A sample may indicate a minimum unit for constructing a picture and may be referred to as a pixel, a picture element, a pel, or the like. The sample may include a luminance (luma) component and/or a chrominance (chroma, color difference) component. In the present specification, coding may be used to indicate encoding or may commonly indicate encoding/decoding.

A picture may include at least one or more slices and a slice may include at least one or more blocks. The slice can be configured to include the integer number of blocks for purposes such as parallel processing, resynchronization of decoding when a bit stream is damaged due to data loss, and the like. Each slice can be independently coded. A block may include at least one or more samples and may indicate an array of samples. A block may have a size equal to or a less than a size of a picture. A block may be referred to as a unit. A currently coded picture may be referred to as a current picture and a currently coded block may be referred to as a current block. There may exist various block units constructing a picture. For example, in case of ITU-T H.265 standard (or High Efficiency Video Coding (HEVC) standard), there may exist such a block unit as a coding tree block (CTB) (or a coding tree unit (CTU)), a coding block (CB) (or a coding unit (CU)), a prediction block (PB) (or a prediction unit (PU)), a transform block (TB) (or a transform unit (TU)), and the like.

The coding tree block corresponds to the most basic unit for constructing a picture and can be divided into coding blocks of a quad-tree form to improve coding efficiency according to texture of a picture. The coding block may correspond to a basic unit for performing coding and intra-coding or inter-coding can be performed in a unit of the coding block. The intra-coding is to perform coding using intra prediction and the intra prediction is to perform prediction using samples included in the same picture or slice. The inter-coding is to perform coding using inter prediction and the inter prediction is to perform prediction using samples included in a picture different from a current picture. A block coded using the intra-coding may be referred to as an intra block and a block coded using the inter-coding may be referred to as an inter block. And, a coding mode using the intra-coding can be referred to as an intra mode and a coding mode using the inter-coding can be referred to as an inter mode.

The prediction block may correspond to a basic unit for performing prediction. Identical prediction can be applied to a prediction block. For example, in case of the inter prediction, the same motion vector can be applied to one prediction block. The transform block may correspond to a basic unit for performing transformation. The transformation may correspond to an operation of transforming samples of a pixel domain (or a spatial domain or a time domain) into a conversion coefficient of a frequency domain (or a transform coefficient domain), or vice versa. In particular, an operation of converting a conversion coefficient of the frequency domain (or transform coefficient domain) into samples of the pixel domain (or spatial domain or time domain) can be referred to as inverse transformation. For example, the transformation may include discrete cosine transform (DCT), discrete sine transform (DST), a Fourier transform, and the like.

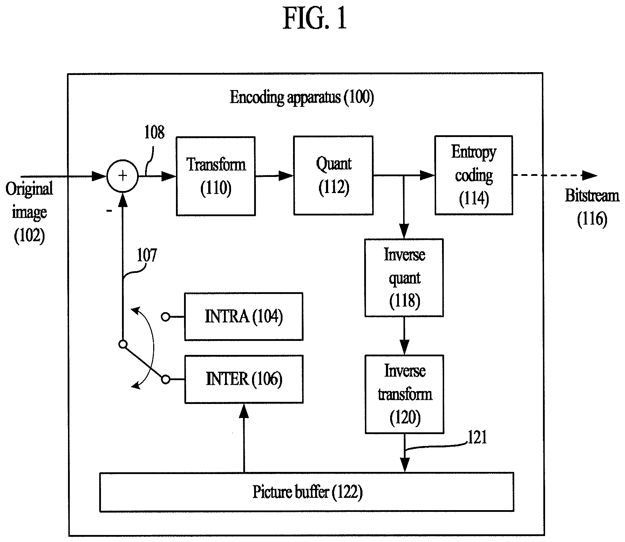

FIG. 1 illustrates an encoding procedure.

An encoding apparatus 100 receives an input of an original image 102, performs encoding on the original image, and outputs a bit stream 114. The original image 102 may correspond to a picture. Yet, in the present example, assume that the original image 102 corresponds to a block for constructing a picture. For example, the original image 102 may correspond to a coding block. The encoding apparatus 100 can determine whether the original image 102 is coded in intra mode or inter mode. If the original image 102 is included in an intra picture or a slice, the original image 102 can be coded in the intra mode only. However, if the original image 102 is included in an inter picture or a slice, for example, it is able to determine an efficient coding method in consideration of RD (rate-distortion) cost after the intra-coding and the inter-coding are performed on the original image 102.

In case of performing the intra-coding on the original image 102, the encoding apparatus 100 can determine an intra-prediction mode showing RD optimization using reconstructed samples of a current picture including the original image 102 (104). For example, the intra-prediction mode can be determined by one selected from the group consisting of a direct current (DC) prediction mode, a planar prediction mode and an angular prediction mode. The DC prediction mode corresponds to a mode in which prediction is performed using an average value of reference samples among reconstructed samples of a current picture, the planar prediction mode corresponds to a mode in which prediction is performed using bilinear interpolation of reference samples, and the angle prediction mode corresponds to a mode in which prediction is performed using a reference sample located in a specific direction with respect to the original image 102. The encoding apparatus 100 can output a predicted sample or a prediction value (or predictor) 107 using the determined intra prediction mode.

When the inter-coding is performed on the original image 102, the encoding apparatus 100 performs motion estimation (ME) using a reconstructed picture included in a (decoded) picture buffer 122 and may be then able to obtain motion information (106). For example, the motion information can include a motion vector, a reference picture index, and the like. The motion vector may correspond to a two-dimensional vector that provides an offset from a coordinate of the original image 102 to a coordinate in a reference picture in a current picture. The reference picture index may correspond to an index for a list of reference pictures (or a reference picture list) used for inter prediction among the reconstructed pictures stored in the (decoded) picture buffer 122. The reference picture index indicates a corresponding reference picture. The encoding apparatus 100 can output a predicted sample or a predicted value 107 using the obtained motion information.

Subsequently, the encoding apparatus 100 can generate a residual data 108 from a difference between the original image 102 and the predicted sample 107. The encoding apparatus 100 can perform a transformation on the generated residual data 108 (110). For example, Discrete Cosine Transform (DCT), Discrete Sine Transform (DST), and/or wavelet transform can be applied for the transformation. More specifically, it may use an integer-based DCT having a size of 4×4 to 32×32 and 4×4, 8×8, 16×16, and 32×32 transforms can be used. The encoding apparatus 100 performs transformation 110 to obtain transform coefficient information.

The encoding apparatus 100 quantizes the transform coefficient information to generate quantized transform coefficient information (112). Quantization may correspond to an operation of scaling a level of the transform coefficient information using a quantization parameter (QP). Hence, the quantized transform coefficient information may be referred to as scaled transform coefficient information. The quantized transform coefficient information can be output as a bit stream 116 via entropy coding 114. For example, the entropy coding 114 can be performed based on fixed length coding (FLC), variable length coding (VLC), or arithmetic coding. More specifically, it may apply context adaptive binary arithmetic coding (CABAC) based on arithmetic coding, Exp-Golomb coding based on variable length coding, and fixed length coding.

And, the encoding apparatus 100 performs inverse quantization 118 and inverse transformation 120 on the quantized transform coefficient information to generate a reconstructed sample 121. Although it is not depicted in FIG. 1, in-loop filtering can be performed on a reconstructed picture after obtaining the reconstructed picture by acquiring the reconstructed sample 121 for a picture. For the in-loop filtering, for example, it may apply a deblocking filter, a sample adaptive offset (SAO) filter. Subsequently, the reconstructed picture 121 is stored in the picture buffer 122 and can be used for encoding a next picture.

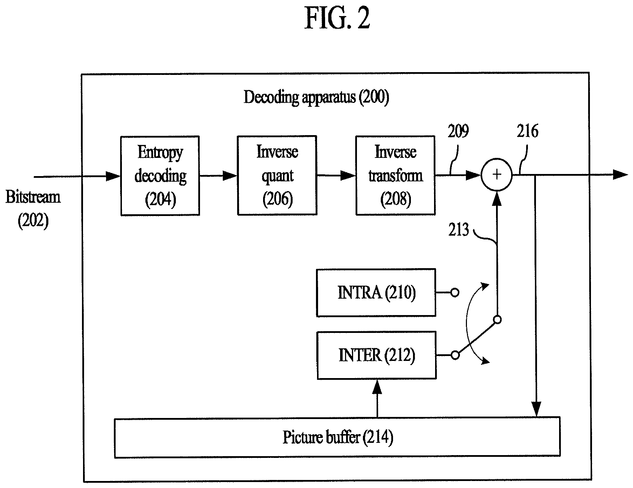

FIG. 2 illustrates a decoding procedure.

A decoding device 200 receives a bit stream 202 and can perform entropy decoding 204. The entropy decoding 204 may correspond to a reverse operation of the entropy coding 114 mentioned earlier in FIG. 1. The decoding device 200 can obtain data and (quantized) transform coefficient information necessary for decoding by including prediction mode information, intra prediction mode information, motion information, and the like through the entropy decoding 204. The decoding device 200 can generate a residual data 209 by performing inverse quantization 206 and inverse transformation 208 on the obtained transform coefficient information.

The prediction mode information obtained through the entropy decoding 204 can indicate whether a current block is coded in intra mode or inter mode. If the prediction mode information indicates the intra mode, the decoding device 200 can obtain a prediction sample (or prediction value) 213 from reconstructed samples of a current picture based on the intra prediction mode obtained through the entropy decoding 204 (210). If the prediction mode information indicates the inter mode, the decoding device 200 can obtain a prediction sample (or prediction value) 213 from a reference picture stored in the picture buffer 214 based on the motion information obtained through the entropy decoding 204 (212).

The decoding device 200 can obtain a reconstructed sample 216 for the current block using the residual data 209 and the prediction sample (or prediction value). Although it is not depicted in FIG. 2, in-loop filtering can be performed on a reconstructed picture after the picture is reconstructed by obtaining the reconstructed sample 216 for a picture. Subsequently, the reconstructed picture 216 can be stored in the picture buffer to decode a next picture or can be outputted for display.

A video encoding/decoding process requires very high complexity for software/hardware (SW/HW) processing. Hence, in order to perform a job of high complexity using a limited resource, it is able to process a picture (or video) in a manner of partitioning it by a basic processing unit that is a minimum processing unit. The basic processing unit may have a different name according to a video coding standard.

For example, in case of JPEG (Joint Photographic Experts Group) standard (ISO/IEC 10918 or ITU-T T.81), a basic processing unit may be named MPU (Minimum Processing Unit) and have a size of 16 × 16 pixels. Hence, in case of the JPEG standard, a single picture can be encoded/decoded in a manner of being divided by MPU that is a basic processing unit. For detailed example, in case of encoding/decoding 640×480 picture, it is able to perform an encoding procedure shown in FIG. 1 or a decoding procedure shown in FIG. 2 on 1,200 MPUs resulting from dividing a picture into the 1,200 MPUs (= 40 × 30).

For another example, in case of MPEG (Moving Picture Experts Group) standard (ISO/IEC 11172-2 or ITU-T H.261), MPEG-2 standard (ISO/IEC 13818-2 or ITU-T H.262), MPEG-4 standard (ISO/IEC 14496-2 or ITU-T H.263 or H.26L), VC-1 or SMPTE (Society of Motion Picture and Television Engineers) 421M standard, or AVC (Advanced Video Coding) standard (MPEG-4 part 10 or ITU-T H.264), a basic processing unit may be named Macroblock (or, MB) and have a size of 16×16 pixels. Hence, in cases of the above standards, a single picture can be encoded/decoded by being divided by a macroblock that is a basic processing unit. For detailed example, in case of encoding/decoding 640×480 picture, it is able to perform an encoding procedure shown in FIG. 1 or a decoding procedure shown in FIG. 2 on 1,200 MBs resulting from dividing a picture into the 1,200 MBs (= 40 × 30).

For further example, in case of HEVC (High Efficiency Video Coding) standard (ISO/IEC 23008-2 or ITU-T H.265), as described above, a basic processing unit may be named CTB (Coding Tree Block) or CTU (Coding Tree Unit) MP and have a size of 64 × 64 pixels. Hence, in case of the HEVC standard, a single picture can be encoded/decoded in a manner of being divided by CTB that is a basic processing unit. For detailed example, in case of encoding/decoding 8192×4096 picture, it is able to perform an encoding procedure shown in FIG. 1 or a decoding procedure shown in FIG. 2 on 8,192 CTBs resulting from dividing a picture into the 8,192 CTBs (= 128 × 64).

According to the related art video coding standard, an intra coding mode or an inter coding mode may be determined as a basic processing unit. Hence, if an intra coding mode or an inter coding mode is determined as a basic processing unit, although the basic processing unit is partitioned (or split) into subblocks, an intra or inter coding mode determined per basic processing unit may be identically applicable to the subblock.

For example, in the existing video coding standards such as MPEG, MPEG-2, MPEG-4, and VC-1, an intra or inter coding mode is determined by a macroblock unit that is a basic processing unit. Hence, once an intra or inter coding mode is determined as a basic processing unit, although a macroblock is partitioned into a plurality of blocks, each of the partitioned blocks may be encoded/decoded according to a coding mode of the macroblock.

Similarly, in case of AVC standard, an intra or inter prediction mode is determined by a macroblock unit that is a basic processing unit. Although a macroblock is partitioned into a plurality of blocks, each of the partitioned blocks may be encoded/decoded according to a prediction mode of the macroblock.

In the HEVC standard, unlike the existing video coding standards (e.g., VC-1, AVC), for the compression efficiency enhancement, after partitioning CTB into at least one coding block (or coding unit) by a quadtree scheme, an intra or inter prediction mode can be determined for a coding block (or coding unit). If CTB is not partitioned, the CTB may correspond to a coding block. In this case, the coding block may have the same size of the CTB, and an intra or inter prediction mode can be determined for the corresponding coding tree block.

As described above, in the present specification, an intra prediction mode may refer to a mode of performing a prediction using a reconstructed sample of a current picture or a mode of performing a prediction using a current picture without using a picture other than the current picture and be schematically called an intra mode. An inter prediction mode may refer to a mode of performing a prediction using a reconstructed sample of a picture different from a current picture or a mode of performing a prediction using a current picture and a picture different from the current picture and be schematically called an inter mode. Moreover, a block coded using an intra prediction mode may be called an intra block and a block coded using an inter prediction mode may be called an inter block.

When a CTB is partitioned by a quadtree scheme, it may be partitioned recursively. After a CTB has been partitioned into 4 blocks, each of the blocks may be partitioned again into subblocks by a quadtree scheme in addition. Each block finally generated by recursively partitioning a CTB by a quadtree scheme may become a coding block (or a coding unit). For example, after a CTB has been partitioned into first to fourth blocks, if the first block is partitioned into fifth to eighth blocks but the second to fourth blocks are not partitioned, the second to eighth blocks can be determined as coding blocks. In this example, an intra or inter prediction mode may be determined for each of the second to eighth blocks.

Whether a coding tree block (or a coding tree unit) is partitioned into a coding block (or a coding unit) may be determined by an encoder side in consideration of RD (rate distortion) efficiency, and information indicating a presence or non-presence of partition may be included in a bitstream. For example, information indicating whether a coding block (or a coding unit) is partitioned into a coding block (or a coding unit) having a half horizontal/vertical size may be named split_cu_flag in HEVC standard. For clarity, information indicating whether a block is partitioned within a coding tree block may be called a partition indication information for a coding block. A decoder side determines whether to partition a block by obtaining information indicating a presence or non-presence of partition for each block within a coding quadtree from a bitstream and is able to partition the block recursively by a quadtree scheme. A coding tree refers to a tree structure of a coding block formed by recursively partitioning a coding tree block. If each block is not partitioned anymore within a coding tree, the corresponding block may be designated as a coding block.

As described above, a coding block (or a coding unit) can be partitioned into at least one prediction block (or prediction unit) to perform a prediction. Moreover, a coding block (or a coding unit) can be partitioned into at least one transform block (or transform unit) to perform a transformation. In a manner similar to that of a coding tree block, a coding block may be recursively partitioned into a transform block by a quadtree scheme. A structure formed by partitioning a coding block by a quadtree scheme may be called a transform tree, and information indicating whether each block is partitioned within a transform tree may be included in a bitstream, which is similar to the partition indication information. For example, information indicating whether a block is partitioned into a block having a half horizontal/vertical size for a transformation in HEVC standard may be called split_transform_flag. For clarity, information indicating whether each block is partitioned in a transform tree may be called partition indication information.

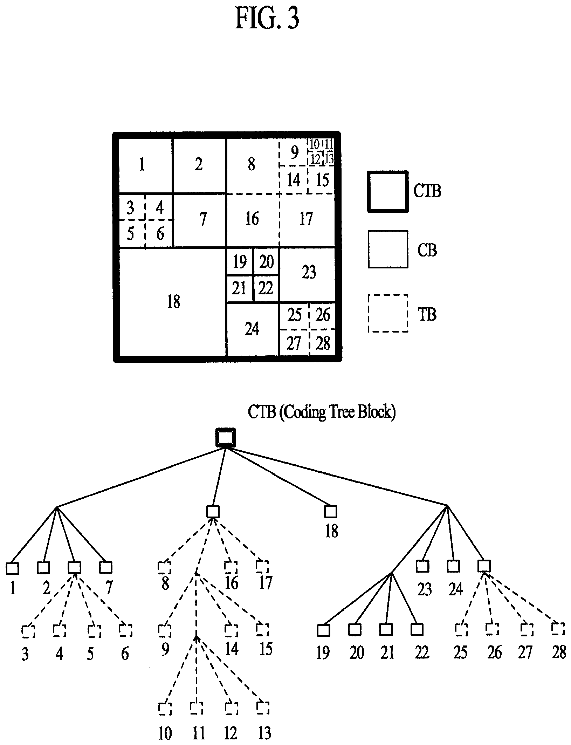

FIG. 3 is a diagram showing one example of partitioning a coding tree block by a quadtree scheme.

Referring to FIG. 3, a coding tree block may be partitioned into a first coding block containing blocks 1 to 7, a second coding block containing blocks 8 to 17, a third coding block corresponding to a block 18, and a fourth coding block containing blocks 19 to 28. The first coding block may be partitioned into a coding block corresponding to the block 1, a coding block corresponding to the block 2, a fifth coding block containing the blocks 3 to 6, and a coding block corresponding to the block 7. The second coding block may be partitioned into additional transform blocks for transformation despite failing to be further partitioned within a coding quadtree. The fourth coding block may be partitioned into a sixth coding block containing the blocks 19 to 22, a coding block corresponding to the block 23, a coding block corresponding to the block 24, and a seventh coding block containing the blocks 25 to 28. The sixth coding block may be partitioned into a coding block corresponding to the block 19, a coding block corresponding to the block 20, a coding block corresponding to the block 21, and a coding block corresponding to the block 22. And, the seventh coding block may be partitioned into additional transform blocks for transformation despite failing to be further partitioned within a coding quadtree.

As described above, information (e.g., split_cu_flag) indicating a presence or non-presence of partition for a coding tree block or each coding block may be included in a bitstream. If the information indicating a presence or non-presence of partition has a first value (e.g., 1), the coding tree block or each coding block can be partitioned. If the information indicating a presence or non-presence of partition has a second value (e.g., 0), the coding tree block or each coding block is not partitioned. And, a value of the information indicating a presence or non-presence of partition may vary.

In the example shown in FIG. 3, the partition indication information (e.g., split_cu_flag) for the coding tree block, the first coding block, the fourth coding block and the sixth coding block may have the first value (e.g., 1). A decoder obtains partition indication information on the corresponding block from the bitstream and is then able to partition the corresponding block into 4 subblocks. On the other hand, the partition indication information (e.g., split_cu_flag) for other coding blocks (coding block corresponding to block 1, block 2, block 7, blocks 18 to 23, and blocks 3 to 6, coding block corresponding to blocks 8 to 17, and coding block corresponding to blocks 25 to 28) may have the second value (e.g., 0). The decoder obtains the partition indication information on the corresponding block from the bitstream and does not further partition the corresponding block according to this value.

As described above, each coding block may be partitioned into at least one transform block by a quadtree scheme according to partition indication information for a transform block for transformation. Referring now to FIG. 3, since a coding block corresponding to the blocks 1, 2, 7 and 18 to 24 is not partitioned for transformation, a transform block may correspond to a coding block but another coding block (a coding block corresponding to the blocks 3 and 4, 8 to 17, or 25 to 28) may be additionally partitioned for transformation. Partition indication information (e.g., split_transform_flag) for each block within a transform tree formed from each coding block (e.g., a coding block corresponding to the blocks 3, 4, 8 to 17, or 25 to 28) and the corresponding coding block can be partitioned into a transform block according to a value of the partition indication information. As shown in FIG. 3 exemplarily, a coding block corresponding to the blocks 3 to 6 may be partitioned into transform blocks to form a transform tree of depth 1, a coding block corresponding to the blocks 8 to 17 may be partitioned into transform blocks to form a transform tree having depth 3, and a coding block corresponding to the blocks 25 to 28 may be partitioned into transform blocks to form a transform tree having depth 1.

Since the partitioning scheme by quadtree partitions a corresponding block into a subblock having a half horizontal/vertical size, it is not necessary for the information on a partition type of the corresponding block to be included in a bitstream additionally. Namely, information indicating a presence or non-presence of partition needs to be included in a bitstream only. In this case, for example, since only 1-bit information can be included in the bitstream, it may be effective in partitioning a 2-dmensionaly (2D) space. Yet, in case of the quadtree scheme, each time partition is performed once, since an information amount for a corresponding partitioned block regularly increases 4 times, an inefficient case may occur. Moreover, since a picture content included in a single block is not always configured to correspond to 4 blocks in same size, a relatively large amount of transform coefficient information occurring by performing prediction and transformation may be generated and coding efficiency may be lowered. Since the corresponding block is always partitioned into 4 subblocks in equal size, it has a problem of failing to cope with a picture content flexibly.

The present invention proposes various partitioning schemes to improve such a problem.

### Partitioning Method 1

In case of a quadtree scheme, since a corresponding block is always partitioned into 4 blocks, an information amount for each block has no choice but to increase 4 times each. Hence, in order to decrease an information amount increasing each time a bock is partitioned, it is able to consider partitioning a block using a binary tree scheme. Therefore, the present invention proposes to partition a coding tree block (or a coding tree unit) using a binary tree scheme.

In case of partitioning a block (coding tree block or coding block), the corresponding block may be partitioned into 2 subblocks. Particularly, a specific block may be partitioned into 2 subblocks having the same vertical size of the corresponding block. In this case, a horizontal size of the subblock may correspond to a half of a horizontal size of the corresponding block and each of the 2 subblocks may have a rectangular shape of the same type. For example, if a current block is a 2N×2N block, it can be partitioned into 2 N×2N blocks.

Or, a specific block may be partitioned into 2 subblocks having the same horizontal size of the corresponding block. In this case, a vertical size of the subblock may correspond to a half of a vertical size of the corresponding block and each of the 2 subblocks may have a rectangular shape of the same type. For example, if a current block is a 2N×2N block, it can be partitioned into 2 2N×N blocks.

In case of applying a partitioning method based on a binary tree scheme according to the present invention, information indicating a presence or non-presence of partition and information indicating a partition direction may be signaled through a bitstream to indicate a partition type. The information indicating a presence or non-presence of partition indicates whether a corresponding block is partitioned into 2 blocks. For non-restrictive example, in case of having a first value (e.g., 1), this information indicates that the corresponding block is partitioned into 2 subblocks. In case of having a second value (e.g., 0), this information indicates that the corresponding block is not further partitioned. The first value and/or the second value may be set to a different value. Moreover, for example, information indicating a presence or non-presence of partition within a binary tree may refer to split_flag.

Moreover, the information indicating the partition direction may indicate whether a corresponding block is partitioned in a horizontal or vertical direction. For non-restrictive example, if the information indicating the partition direction has a first value (e.g., 0), it may indicate that the corresponding block is partitioned into 2 subblocks in a horizontal direction. If the information has a second value (e.g., 1), it may indicate that the corresponding block is partitioned into 2 subblocks in a vertical direction. The first value and the second value for the information indicating the partition direction may vary. For example, the first value is 1 and the second value is 0. Or, the first value and the second value may include values other than 0 and 1. For example, the information indicating the partition direction may refer to split_dir_flag. And, the information indicating the partition direction may be called partition mode information.

Partitioning in a horizontal direction may indicate that a corresponding block is partitioned into a left subblock and a right subblock. Partitioning in a vertical direction may indicate that a corresponding block is partitioned into a top subblock and a bottom subblock. In case of partitioning horizontally, a horizontal size (or width) of each subblock is a half of a horizontal size (or width) of a corresponding block, and a vertical size (or height) of each subblock is equal to a vertical size (or height) of the corresponding block. In case of partitioning vertically, a horizontal size (or width) of each subblock is equal to a horizontal size (or width) of a corresponding block, and a vertical size (or height) of each subblock is a half of a vertical size (or height) of the corresponding block.

Foe another example of the partitioning method 1 according to the present invention, instead of information indicating a presence or non-presence of partition and information indicating a partition direction, information indicating a partition mode may be included in a bitstream. The partition mode indicating information may indicate both a presence or non-presence of partitioning a block and a partition direction. For non-restrictive example, if the partition mode indicating information has a first value, it may indicate that a corresponding block is partitioned in a horizontal direction. If the partition mode indicating information has a second value, it may indicate that a corresponding block is partitioned in a vertical direction. If the partition mode indicating information has a third value, it may indicate that a corresponding block is not partitioned. For non-restrictive example, the first to third values may be set to 0, 1 and 2, respectively. For another example, the first to third values may be set to 1, 2 and 0, respectively. And, such values may be set to values other than the first to third values. Moreover, for example, the partition mode indicating information may refer to split_mode.

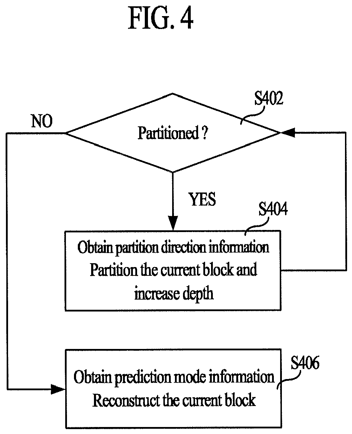

FIG. 4 is a flowchart of a partitioning method according to the present invention. Although a flowchart executed by a decoder is exemplarily shown in the example shown in FIG. 4, steps corresponding to the respective steps of FIG. 4 may be performed by an encoder.

Referring to FIG. 4, in a step S402, a decoder can obtain partition indication information (e.g., split_flag) indicating whether a coding tree block (or coding block) is partitioned from a bitstream. If the partition indication information indicates that the coding tree block is partitioned, the decoder may go to a step S404. If the partition indication information indicates that the coding tree block is not partitioned, the decoder may go to a step S406. As described above, if the partition indication information has a first value (e.g., 1), the partition indication information indicates that the corresponding coding tree block (or coding block) is partitioned. If the partition indication information has a second value (e.g., 0), the partition indication information indicates that the corresponding coding tree block (or coding block) is not partitioned.

In case of performing a partitioning by a binary tree scheme, information (or depth information) indicating a depth within a binary tree for each block can be used. In case of a coding tree block, depth information may have a value of 0. If the coding tree block is partitioned once or more, the depth information may have a value greater than 0.

In the step S404, the decoder may obtain partition direction information (e.g., split_dir_flag) indicating a partition direction of the corresponding coding tree block (or coding block) from the bitstream. The partition direction information may indicate whether the corresponding coding tree block (or coding block) is partitioned into 2 subblocks in a horizontal direction or 2 subblocks in a vertical direction. If the partition direction information indicates the partitioning in the horizontal direction, the decoder may partition the corresponding coding tree block (or coding block) into 2 blocks including a left coding block and a right coding block. If the partition direction information indicates the partitioning in the vertical direction, the decoder may partition the corresponding coding tree block (or coding block) into 2 blocks including a top coding block and a bottom coding block. If the partition direction information has a first value (e.g., 0), the partition direction information indicates that the corresponding coding tree block (or coding block) is partitioned in the horizontal direction. If the partition direction information has a second value (e.g., 1), the partition direction information indicates that the corresponding coding tree block (or coding block) is not partitioned.

In the step S404, the decoder partitions the corresponding coding tree block (or coding block) by a binary tree scheme based on the partition direction information and is then able to increase the depth information by a specific value (e.g., 1). Thereafter, the decoder can recursively perform the step S402 on each partitioned (coding) block. Performing each step recursively may refer to performing each step on a partitioned subblock repeatedly until partitioning is not further performed.

In the step S406, if a specific coding block or coding tree block is not partitioned based on the partition indication information (e.g., split_flag), the decoder obtains prediction mode information on the corresponding block and may perform decoding based on the obtained prediction mode information. The prediction mode information indicates whether the corresponding coding block is coded in intra prediction mode or inter prediction mode.

In the step S406, since the prediction mode (e.g., intra or inter coding mode) for the corresponding coding block is determined according to the prediction mode information, although the corresponding coding block is additionally partitioned into at least one transform block (or unit) for transformation or into at least one prediction block (or unit) to perform prediction, the same prediction mode (or coding mode) may apply to the partitioned transform block or the partitioned prediction block.

Moreover, in the step S406, if the prediction mode indicates that the corresponding coding block is coded in the intra prediction mode (or intra coding mode), the decoder can partition the corresponding coding block into at least one transform block. As described above, a transform tree can be formed by partitioning a coding block. The decoder performs intra prediction on each of the at least one transform blocks partitioned within the transform tree and may obtain a predictor or a prediction value for the corresponding transform block. Hence, the decoder can obtain the prediction value for the corresponding coding block by performing the intra prediction by transform block unit. Moreover, the decoder can obtain residual information by obtaining transform coefficient information on each transform block from the bitstream and performs dequantization/inverse transformation on the obtained transform coefficient information. Hence, the decoder can obtain the residual information by obtaining the transform coefficient information by transform block unit and performing dequantization/inverse transformation. The decoder can reconstruct the corresponding coding block using the prediction value and the residual information for the corresponding coding block.

Moreover, in the step S406, if the prediction mode information indicates that the corresponding coding block is coded in the inter prediction mode (or the inter coding mode), the decoder can partition a coding block into at least one prediction block for prediction. If the coding block is partitioned into the at least one prediction block for the prediction, the decoder obtains motion information (e.g., reference picture index information and/or motion vector information) for each partitioned prediction block from the bitstream, performs an inter prediction, and is then able to obtain a prediction value for the prediction block. Hence, the decoder can obtain the prediction value for the corresponding coding block by performing the inter prediction by prediction block unit. Moreover, in the same manner of the intra prediction mode, the decoder is able to obtain residual information for a corresponding coding block by partitioning a coding block into at least one transform block for transformation and then obtaining residual information on each transform block. The decoder can reconstruct the corresponding coding block using the prediction value and the residual information for the corresponding coding block.

Although the example shown in FIG. 4 illustrates a method for a case that partition indication information (e.g., split_flag) and partition direction information (e.g., split_dir_flag) are signaled through a bitstream separately, decoding can be performed in the same/similar manner even if partition mode information (e.g., split_mode) is signaled through the bitstream. In case that partition mode information is used, the decoder may perform the step S402 and the step S404 according to the partition mode information or the step S406. For instance, if partition mode information indicates that a corresponding coding block is not partitioned, the decoder may go to the step S406. If partition mode information indicates horizontal direction partition or vertical direction partition, the decoder may partition a corresponding block by performing the operations described in association with the step S404 and perform the operations of the step S402 and the step S404 on the partitioned blocks recursively/repeatedly.

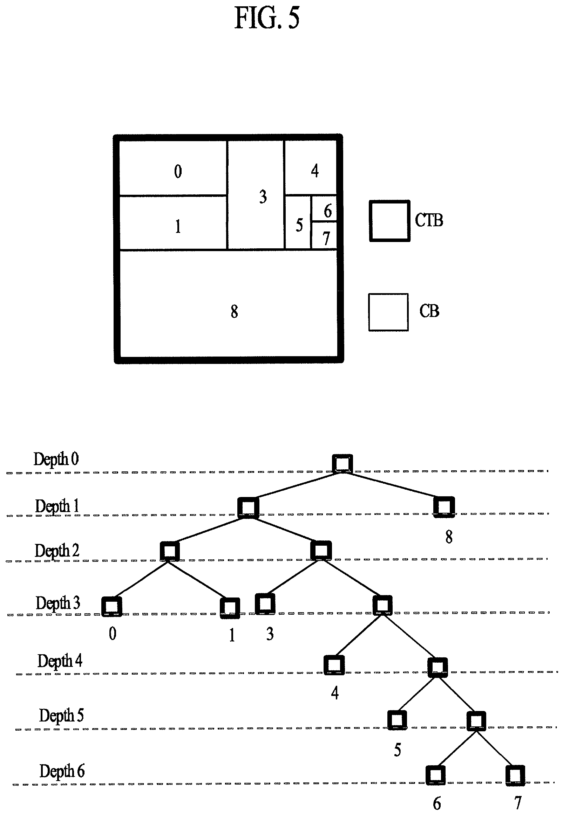

FIG. 5 shows one example of a coding tree block partitioned by a binary tree scheme. In the example shown in FIG. 5, a single coding tree block is assumed as partitioned into 9 coding blocks by a binary tree scheme, by which the present invention is non-limited. Although a single coding tree block is partitioned into coding blocks other than 9 coding blocks or by another binary tree structure, the present invention is applicable identically/similarly.

Referring to FIG. 5, at depth 0, a coding tree block can be partitioned into 2 blocks (block 8 and block corresponding to blocks 0 to 7) in a vertical direction. A depth 1, a top block can be partitioned into 2 blocks (block corresponding to blocks 0 and 1 and block corresponding to blocks 3 to 7) in a horizontal direction. At depth 2, a left block (corresponding to blocks 0 and 1) may be partitioned in the vertical direction and a right block (corresponding to blocks 3 to 7) may be partitioned in the horizontal direction. At depth 3, the blocks 0, 1 and 3 are not further partitioned and additional partition may be recursively performed on the rest of the blocks. In the example of FIG. 5, the coding tree block may be finally partitioned into coding blocks 0 to 8.

As described above, partition indication information (e.g., split_flag) and partition direction information (e.g., split_dir_flag) for each coding blocks (e.g., coding blocks 0 to 8) can be signaled through the bitstream. In this case, the decoder obtains the partition indication information and the partition direction information for each coding block and is able to determine whether to perform an additional partition or a decoding. In case of performing the decoding, the decoder is able to perform the decoding by obtaining prediction mode information for each coding block and applying the same prediction mode within each coding block.

Or, partition mode information (e.g., split_mode) for each coding block (e.g., coding blocks 0 to 8) may be signaled through the bitstream. In this case, the decoder obtained partition mode information for each coding block and is able to determine whether to perform an additional partition or a decoding.

### Partitioning Method 2

By combing the advantages of the quadtree and the binary tree together, it is possible to use a tree structure of a hybrid tree scheme. To this end, whether to use a binary tree scheme or a quadtree scheme up to a prescribed depth (or level) of a tree can be signaled through a bitstream. Information indicating a depth of a coding tree that uses a binary tree scheme or a quadtree scheme may be independently signaled by unit of sequence, picture, slice, tile, or coding tree block (or coding tree unit). A sequence refers to a series of access units and a tile may refer to a rectangular region configured with a coding tree block in a picture. In the partitioning method 2 according to the present invention, for clarity, information indicating a depth of a coding tree that uses a binary tree scheme or a quadtree scheme shall be called depth information.

In case of a hybrid tree scheme, first of all, a binary tree scheme is applied. Thereafter, a quadtree scheme may be applied from a specific depth. In this case, for example, depth information may indicate a maximum depth at whi9ch a binary tree partition scheme is used in a hybrid tree. In this example, if depth information indicates a depth N, a coding tree block is partitioned according to a binary tree scheme up to the depth N and blocks can be partitioned according to a quadtree scheme from a depth N+1.

For detailed example, if a size of a coding tree block (or CTU) is 256×256 and a minimum coding block size is 8×8, a binary tree scheme can be used for depth (CU depth) 0 (256×256) to depth (CU depth) 2 (64×64) and a quadtree scheme can be used for depth (CU depth) 3 (32×32) to depth (CU depth) 5 (8×8).

For another example, depth information may indicate a start depth for using a quadtree scheme in a hybrid tree. In this example, if the depth information indicates depth N, a coding tree block is partitioned up to depth N-1 in the hybrid tree according to the binary tree scheme and blocks can be partitioned from the depth N according to the quadtree scheme.

Or, on the contrary, the quadtree scheme is applied first and the binary tree scheme may be applied from a specific depth. In this case, the binary tree scheme or the quadtree scheme may be applied according to the depth information in the manner similar to the above description.

The depth information according to the partitioning method 2 of the present invention can be signaled through the bitstream before the step S402 shown in FIG. 4. Referring again to FIG. 4, the decoder obtains the depth information from the bitstream before the step S402 and is then able to apply the binary tree scheme or the quadtree scheme based on the obtained depth information. In case of applying the binary tree scheme, the operations described with reference to FIG. 4 may be performed. In case of applying the quadtree scheme, information indicating a partition direction may be omitted.

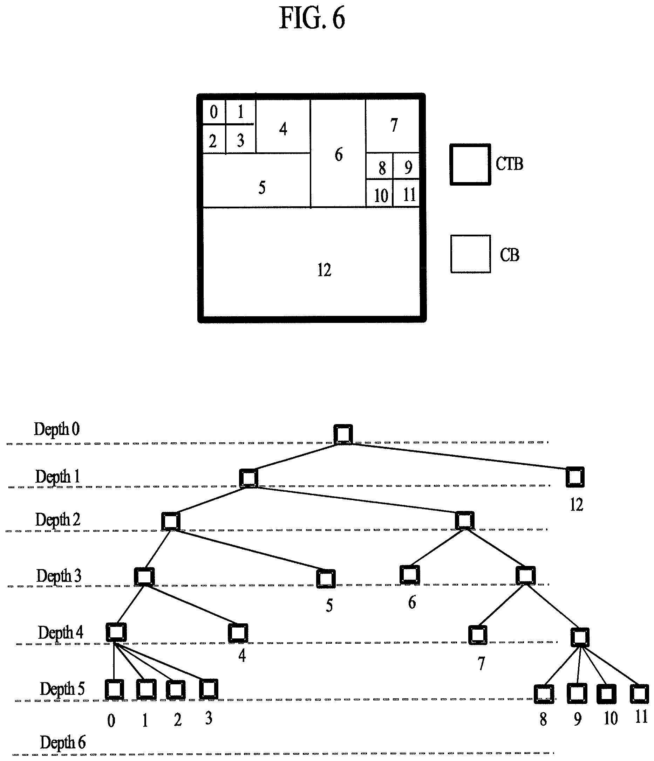

FIG. 6 shows a coding tree block partitioned using a hybrid tree scheme. In the example shown in FIG. 6, a binary tree scheme is assumed as applied up to depth 4 and a quadtree scheme is applied from depth 5, by which the present invention is non-limited.

Referring to FIG. 6, a single coding tree block can be partitioned into coding blocks 0 to 12 using a hybrid tree scheme. Since a binary tree scheme is applied up to depth 4, if depth information indicates a maximum depth to which the binary tree scheme is applied, the depth information indicating the depth 4 can be signaled through a bitstream. Or, if hybrid depth information indicates a start depth to which a quadtree scheme is applied, depth information indicating depth 5 can be signaled through the bitstream. A decoder obtains depth information by unit of sequence, picture, slice, tile or coding tree block (or coding tree unit) from the bitstream and is then able to apply the binary tree scheme or the quadtree scheme based on the depth information.

In the example shown in FIG. 6, a single coding block can be finally partitioned into coding blocks 0 to 12 by applying a hybrid tree scheme. As exemplarily shown in FIG. 6, if the hybrid tree scheme is applied, the finally partitioned coding block may have a rectangular shape as well as a square shape. Namely, in case of partitioning a coding tree block using a hybrid tree scheme, a partitioned coding block may have a size of 2N × 2N, N × 2N, or 2N × N.

### Partitioning Method 3

In the aforementioned partitioning methods, each coding block is partitioned in a symmetric manner. In particular, in the aforementioned partitioning methods, partitioning is performed in a manner that partitioned blocks have the same size. For example, in case of a quadtree scheme or a hybrid tree scheme, if a current block is 2N × 2N, it is partitioned into 4 N×N blocks. In case of a binary or hybrid tree scheme, if a current block is 2N × 2N, it is partitioned into 2 2N×N blocks or 2 N×2N blocks. Yet, according to a picture content, an asymmetric partitioning may be preferable for coding efficiency improvement.

Therefore, in the partitioning method 3 according to the present invention, an asymmetric quadtree scheme is proposed. Each block partitioned in the present invention may have a different size. Namely, if a current block is an N×N block, it can be partitioned into 4 n1×n1, n1×n2, n2×n1 and n2×n2 blocks. In order to raise efficiency of partitioning, n1 and n2 may have arbitrary integer values smaller than a horizontal or vertical size of the current block. For example, if the current block is N×N, n1 and n2 may be arbitrary integers (where 0 < n1, n2 < N).

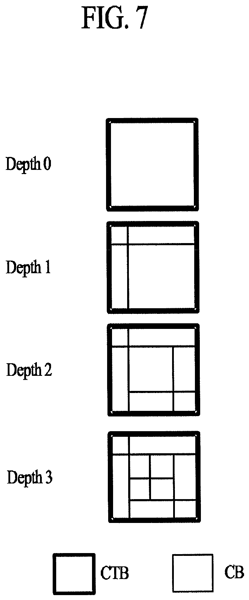

FIG. 7 shows one example of an asymmetric quadtree scheme according to the present invention.

Referring to FIG. 7, at depth 0, a current block is a coding tree block. The current block can be partitioned into 4 blocks of depth 1 by being partitioned into 4 subblocks. If a current block is a right bottom block at depth 1, the current block can be partitioned into the type of depth 2 by being partitioned again into 4 subblocks. If a current block is a left top block at depth 2, the current block can be partitioned into the type of depth 3 by being partitioned again into 4 subblocks.

In order to support such an asymmetric quadtree scheme, center position information for partitioning may be signaled through a bitstream. The center position information may indicate a boundary or center position of 4 subblocks partitioned within a corresponding coding block. Particularly, the center position information may indicate coordinates of a center or boundary position for partition within a current block. In case of applying the asymmetric quadtree scheme, a decoder obtains center position information from a bitstream and is able to partition a current block and is able to partition the current block by a quadtree scheme based on a position indicated by the center position information within the current block. If the center position information indicates the dead center within the current block, the current block may be partitioned symmetrically.

The center position information according to the partitioning method 3 of the present invention may be used for the step S404 of FIG. 4. Referring again to FIG. 4, after obtaining the center position information from the bitstream, the decoder partitions the current block (coding tree block or coding block) into subblocks based on the obtained center position information and is able to perform the step S402 and the step S404 on each of the partitioned subblocks repeatedly/recursively.

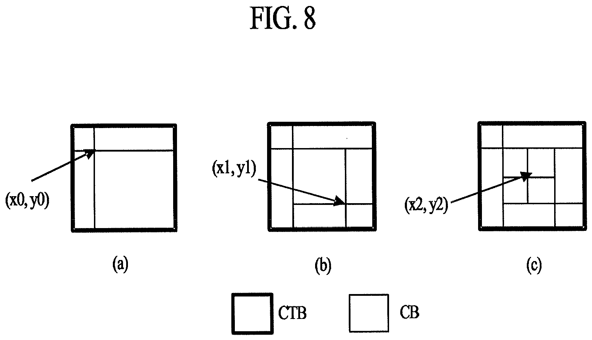

FIG. 8 shows one example of a center position for an asymmetric quadtree scheme. Assuming that a single coding tree block is partitioned in FIG. 8, FIG. 8 (a) shows one example of a center position for depth 0, FIG. 8 (b) shows one example of a center position for depth 1, and FIG. 8 (c) shows one example of a center position for depth 2.

Referring to FIG. 8 (a), since it is a case of depth 0, a current block may correspond to a coding tree block. If center position information for the coding tree block indicates (x0, y0), the current block may be partitioned into 4 blocks centering on a position (x0, y0) within the coding tree block.

Referring to FIG. 8 (b), a current block is a right bottom block in case of depth 1, and center position information may indicate a position (x1, y1) in the current block or a position (x1, y1) in a coding tree block. And, the current block may be partitioned into 4 blocks centering on a position (x1, y1) within the coding tree block.

Referring to FIG. 8 (c), a current block is a left top block among subblocks of depth 1, and center position information may indicate a position (x2, y2) in the current block or a position (x2, y2) in a coding tree block. And, the current block may be partitioned into 4 blocks centering on the position (x2, y2).

As another scheme of the partitioning method 3 according to the present invention, after an asymmetric partitioning method has been defined in advance, partition mode information indicating one of the defined schemes may be signaled through a bitstream. In case of this scheme, since the partitioning scheme is defined in advance, a partition size for each partitioning scheme has a fixed value.

Partition mode information of this scheme may be used for the step S404 of FIG. 4. Referring again to FIG. 4, after obtaining the partition mode information from the bitstream, the decoder partitions the current block (coding tree block or coding block) into subblocks based on the obtained partition mode information and is able to perform the step S402 and the step S404 on each of the partitioned subblocks repeatedly/recursively.

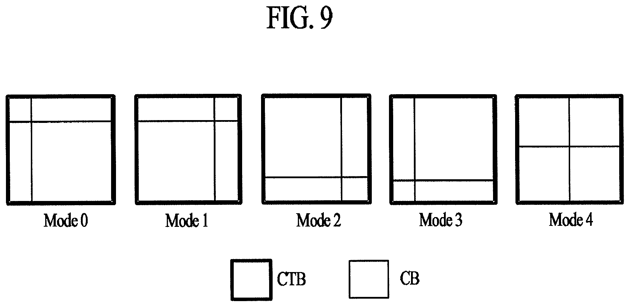

FIG. 9 exemplarily shows various modes for an asymmetric quadtree scheme. In the example of FIG. 9, partition modes of 5 types are illustrated only, by which the present invention is non-limited. And, the present invention may include modes other than the modes shown in FIG. 9.

Referring to FIG. 9, a current block may be partitioned into 4 subblocks based on one of 5 kinds of partition modes according to partition mode information. In the example of FIG. 9, if a current block is assumed as 2N×2N block, a first partition mode (e.g., Mode 0) indicates a case that the current block is partitioned into an n1×n1 block of left top, and n1×n2 block of right top, an n2×n1 block of left bottom, and an n2×n2 block of right bottom within the current block, where n1 < N < n2. A second partition mode (e.g., Mode 1) indicates a case that the current block is partitioned into an n1×n2 block of left top, and n2×n2 block of right top, an n1×n1 block of left bottom, and an n2×n1 block of right bottom within the current block, where n2 < N < n1. A third partition mode (e.g., Mode 2) indicates a case that the current block is partitioned into an n1×n1 block of left top, and n2×n1 block of right top, an n1×n2 block of left bottom, and an n2×n2 block of right bottom within the current block, where n2 < N < n1. A fourth partition mode (e.g., Mode 3) indicates a case that the current block is partitioned into an n1×n2 block of left top, and n2×n2 block of right top, an n1×n1 block of left bottom, and an n2×n1 block of right bottom within the current block, where n1 < N < n2. A fifth partition mode (e.g., Mode 4) indicates a case that the current block is partitioned into 4 N×N blocks within the current block and corresponds to a symmetric quadtree scheme.

Or, the partitioning method 3 of the present invention may be implemented by being modified. Partition mode information according to the partitioning method 3 of the present invention may include a code corresponding to a case that a current block is not partitioned. In this case, the partition mode information according to the partitioning method 3 of the present invention may indicate that the current block is not partitioned or that the current block is partitioned by a specific partitioning scheme. Hence, partition mode information may be used in a manner similar to that of the partition mode information (e.g., split_mode) described in the partitioning method 1 according to the present invention. As described in the partitioning method 1, the decoder may perform the steps S402 and 404 or the step S406 depending on partition mode information. For example, if partition mode information indicates that a corresponding coding block is not partitioned, the decoder may go to the step S406. If partition mode information indicates a specific partition mode, the decoder partitions the current block (coding tree block or coding block) into subblocks based on the partition mode information and is able to perform the step S402 and the step S404 on each of the partitioned subblocks repeatedly/recursively.

### Partitioning Method 4

In the existing HEVC standard, a coding tree block (or coding tree unit) is specified to have a square shape (e.g., 64 × 64). Yet, since it may be more efficient to determine a basic processing unit in a rectangular shape, the present invention proposes a coding tree block in a rectangular shape. In this case, a single picture is configured with coding tree blocks in the rectangular shape of the same size and encoding/decoding may be performed by a coding tree block unit in a rectangular shape. A coding tree block in a rectangular shape may refer to a coding tree block having a horizontal size different from a vertical size.

Moreover, in the partitioning method 4 according to the present invention, proposed is a partitioning method for a case that a coding tree block has a rectangular shape.

As a first method, proposed is a method of partitioning a coding tree block sequentially/recursively/repeatedly according to a depth in the same manner of a quadtree scheme applied to a coding tree block in a square shape [Referred to as 'partitioning method 4-1']. Since a quadtree block if a rectangular shape is partitioned, partitioned subblocks may have rectangular shapes. Hence, in a coding tree formed by being finally partitioned by a quadtree scheme, coding blocks may have rectangular shapes as well. As described above, since the intra/inter prediction mode is determined by unit of coding block (or coding unit), the intra/inter prediction mode may be determined by a coding block unit in a rectangular shape in case of the partitioning method 4-1. In order to support the partitioning method 4-1 according to the present invention, a coding block (or coding unit) that is a unit for intra/inter prediction mode determination may have a rectangular shape.

In case of the partitioning method 4-1 according to the present invention, although a coding block in rectangular shape is supported, a prediction block for inter prediction or a transform block for transformation may have a square shape. Particularly, a coding block in rectangular shape may be partitioned into a plurality of prediction blocks in square shape for prediction and a coding block in rectangular shape may be partitioned into a plurality of transform blocks in square shape for transformation. For example, if a coding block is 4N × N, the corresponding coding block is partitioned into 4 N×N transform blocks for transformation and can be then partitioned into transform blocks in smaller size by a quadtree scheme recursively/repeatedly. In this case, although an intra/inter prediction mode is determined by a coding block unit in rectangular shape, intra prediction and/or transformation may be performed by a transform block unit in square shape and inter prediction may be performed by a prediction block unit in square shape as well.

For another example, the partitioning method 4-1 according to the present invention is applicable to a transform tree identically/similarly. In this case, a transform block may have a rectangular shape and intra prediction and/or transformation may be performed in rectangular shape.

As a second method, if a coding tree block in rectangular shape is partitioned up to a coding block in minimum size, it is proposed that the coding tree block should be partitioned into a coding block in square shape [Referred to as 'partitioning method 4-2']. If a coding tree block is partitioned up to a coding block in minimum size, since it is highly probable that the corresponding coding block is not further partitioned into other transform blocks for transformation, when the coding tree block is partitioned up to the coding block in minimum size, it may be advantageous that the coding tree block is partitioned into a coding block in square shape for transformation in advance. The partitioning method 4-2 according to the present invention may guarantee that a coding block in minimum size has a square shape.

A minimum coding block size may be signaled through a bitstream. In order to reduce the number of bits required for signaling the minimum coding block size, the minimum coding block size is a value resulting from subtracting a specific offset after taking a log2 value of a corresponding information and may be signaled through the bitstream. In this case, the decoder may obtain the value of log2 of the minimum coding block size by obtaining information indicating a minimum size of a coding block from the bitstream and then adding a specific offset to a value of the information. For example, the specific offset may be 3.

Since a size of block can be represented as 2 to the power in general, it may be efficient to take a log2 value of a size in representing a size of a block. If a shift operation is used in finding a size of a block actually, it is able to find a real size from the log2 value with a single instruction cycle. Hence, in order to determine whether a coding block has a minimum size, it is able to compare a log2 value of a size of a current coding block with a log2 value of the minimum coding block size. If the two values are equal to each other, it can be determined that the corresponding coding block as a minimum size. If the log2 value of the size of the current coding block is greater than the log2 value of the minimum coding block size, it can be determined that the current coding block is greater than the minimum coding block size. Since the quadtree scheme of the rectangular shape is assumed, when a horizontal size (or width) or a vertical size (or height) of the current coding block is compared with the minimum size, if one of the two values is equal to the minimum size, the current coding block can be partitioned into a square coding block.

Information indicating a minimum coding block size may be signaled at the level of sequence, picture, slice or tile through a bitstream. Hence, referring again to FIG. 4, the decoder obtains the information indicating the minimum coding block size from the bitstream before the step S402 and is then able to perform the partitioning method 4-2 of the present invention based on the obtained minimum coding block size. Since the quadtree scheme is applied in the partitioning method 4-2 of the present invention, an operation related to information (e.g., split_dir_flag) indicating a partition direction can be skipped.

As a third method, it is proposed to signal a depth, at which partition of a square quadtree scheme is performed, through a bitstream and to perform a partition by a quadtree scheme in square shape [Referred to as 'partitioning method 4-3']. In the partitioning method 4-3 according to the present invention, it is able to specify a depth (or a depth level) at which a coding block has a square shape. In the partitioning method 4-3 according to the present invention, a decoder obtains depth information indicating a depth at which a partition is applied by a quadtree scheme of a square shape from a bitstream and is able to partition a coding block by a quadtree scheme of a square shape from the indicated depth.

For example, if depth information indicates depth 2, the decoder can partition a coding block recursively/repeatedly by applying a quadtree scheme of a square shape from the depth 2. To this end, if a coding block in rectangular shape is additionally partitioned at depth 1, a coding block of the depth 1 can be partitioned into a coding block in square shape. This is generalized as follows. Assuming that depth information obtained through a bitstream indicates depth N, if a rectangular coding block of depth N-1 is partitioned, a rectangular coding block can be partitioned so as to become a coding block in square shape at depth N instead of a quadtree scheme of a rectangular shape.

As a modification of the partitioning method 4-3 of the present invention, information indicating a size of a block to which a partition is applied by a quadtree scheme of a square shape can be signaled through a bitstream instead of depth information. In this case, the information indicating the size of the block may be signaled through the bitstream in a manner identical/similar to that of the description of the partitioning method 4-2 of the present invention, and a decoder can operate in a manner identical/similar to the description of the partitioning method 4-2 of the present invention.

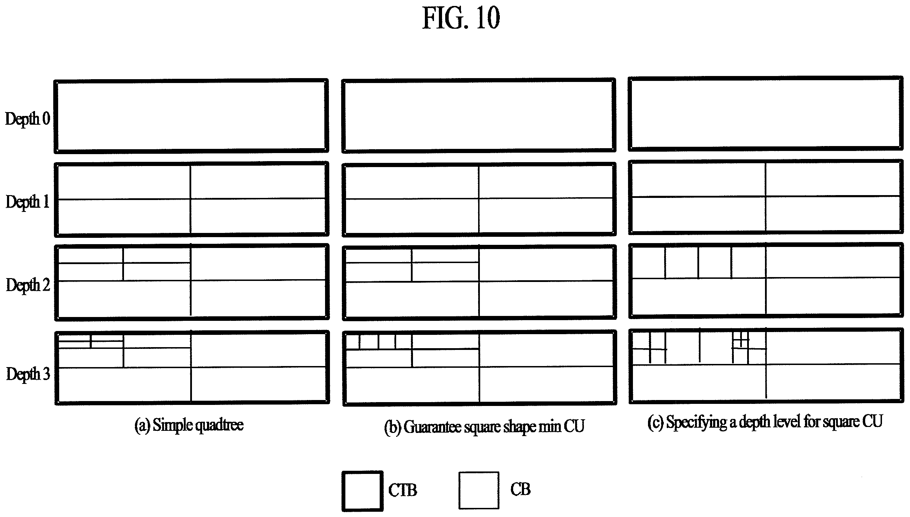

FIG. 10 shows one example of a partitioning method for a rectangular tree block according to the present invention. FIG. 10 (a) shows one example of a coding tree block partitioned by the partitioning method 4-1 of the present invention, FIG. 10 (b) shows one example of a coding tree block partitioned by the partitioning method 4-2 of the present invention, and FIG. 10 (c) shows one example of a coding tree block partitioned by the partitioning method 4-3 of the present invention. In the example of FIG. 10, a coding tree block is assumed as partitioned up to depth 3, by which the present invention is non-limited.

Referring to FIG. 10 (a), a coding block in rectangular shape is partitioned by a simple quadtree scheme. And, a finally formed coding block has a rectangular shape as well.

Referring to FIG. 10 (b), assuming that a height of a coding block at depth 2 is equal to a minimum size, a coding block is partitioned into a coding block in square shape at depth 2.

Referring to FIG. 10 (c), if depth information indicates a partition in square shape from depth 2, a coding block can be partitioned by applying a quadtree scheme of a square shape from the depth 2. To this end, a coding block partitioned at depth 1 may be partitioned into a coding block in square shape.

### Partitioning Method 5

A method of maintaining a quadtree scheme of a square shape despite supporting a coding tree block in rectangular shape can be considered. To this end, the present invention proposes to equally partition a coding tree block to have a square shape at depth 1. Particularly, according to the present invention, if a coding tree block is partitioned at depth 0, first of all, it can be equally partitioned into blocks in square shape. Hence, according to the present invention, an existing quad tree scheme is intactly applicable from depth 1 and a procedure related to transformation and prediction is applicable identically. Hence, despite supporting a coding tree block in rectangular shape, it is advantageous in that an existing partitioning scheme and an existing encoding/decoding scheme can be maintained intact.

A size of a square block partitioned from a coding tree block (an initial partition size of a coding tree block or a size of a square block at depth 1) can be signaled through a bitstream. In this case, the size of the square block partitioned from the coding tree block may be independently signaled by a unit of sequence, picture, slice, tile, or coding tree block (or coding tree unit). Hence, a decoder obtains information indicating the size of the square block partitioned from the coding tree block by the unit of sequence, picture, slice, tile, or coding tree block (or coding tree unit) and is then able to equally partition the coding tree block into the square block in the indicated size based on the obtained information.

Hence, referring again to FIG. 4, the decoder obtains the information indicating the size of the square block partitioned from the coding tree block from the bitstream before the step S402 and is then able to perform the partitioning method 5 of the present invention based on the obtained size of the square block. From the partitioning method 5 of the present invention, an operation related to information (e.g., split_dir_flag) indicating a partition direction can be omitted.

And, the size of the square block partitioned from the coding tree block can be indicated as a value resulting from subtracting a specific offset from a log2 value. In this case, the decoder obtains the information indicating the size of the square block partitioned from the coding tree block from the bitstream and is able to obtain the size of the square block using a value obtained by adding the specific offset. The size of the square block can be obtained by shifting 1 to the left by the obtained value.

Or, the size of the square block partitioned from the coding tree block (an initial partition size of a coding tree block or a size of a square block at depth 1) may be fixed as a predetermined value by both encoder and decoder sides in advance. If the size of the square block is fixed as the predetermined value in advance, the decoder can equally partition the coding tree block into a square block in fixed size in case of initially partitioning the coding tree block For example, if a coding tree block in rectangular shape is greater than that (e.g., 64×64) of an existing coding tree block, a square block in fixed size may be configured to have the size (e.g., 64×64) of the existing coding tree block to maintain the compatibility with an existing scheme.

In this case, although the decoder may perform the operation described with reference to FIG. 4, an operation related to information (e.g., split_dir_flag) indicating a partition direction may be omitted.

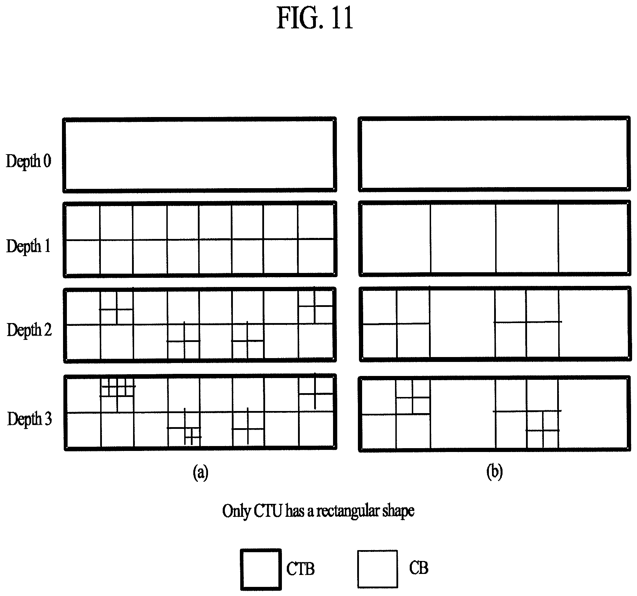

FIG. 11 shows one example of a coding tree block partitioned by a partitioning method according to the present invention. In the example of FIG. 11, a coding tree block is assumed as partitioned up to depth 3, by which the present invention is non-limited.

Referring to FIG. 11, although a coding tree block has a rectangular shape, it can be partitioned into a coding block in square shape from depth 1 by the partitioning method 5 according to the present invention. In case of an initial partition of the coding tree block, as shown in FIG. 11 (a) or FIG. 11 (b), the coding tree block can be partitioned into square blocks in various sizes at depth 1. Since a block in square shape exists from depth 1 only, as a quadtree scheme is recursively/repeatedly applied in a manner identical/similar to that of an existing scheme, the coding tree block can be partitioned into coding blocks in square shape.

### Partitioning Method 6

In a partitioning method 6 according the present invention, proposed is a method of combining a quadtree scheme and a binary tree scheme freely and designating a partition size freely. In the partitioning method 6, information on partition (referred to as partition mode information), a minimum unit of partition (referred to as minimum partition unit information), and partitioned position information (referred to as partition position information) can be signaled through a bitstream.

Partition mode information may indicate a partitioning scheme of a current block. Based on the partition mode information, the partitioning scheme of the current block may include 4 kinds of partitioning schemes. A first partitioning scheme indicates that a current block is not partitioned. A second partitioning scheme indicates that a current block is partitioned into 2 blocks in a vertical direction. A third partitioning scheme indicates that a current block is partitioned into 2 blocks in a horizontal direction. A fourth partitioning scheme indicates that a current block is partitioned into 4 blocks in a manner similar to a quadtree scheme. For example, partition mode information may be referred to as a split mode.

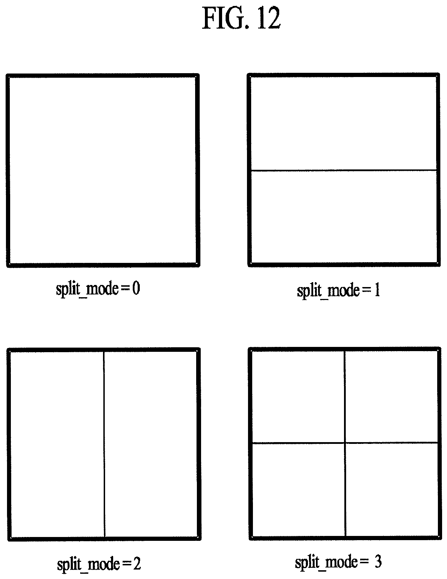

FIG. 12 shows one example of a partitioning scheme based on partition mode information according to the present invention.

Referring to FIG. 12, based on partition mode information (e.g., split_mode), a current block is not partitioned or partitioned into two or more blocks according to one of 4 kinds of partitioning schemes. A value of partition mode information corresponding to each partitioning scheme is just exemplary may be set to another value.

In the example of FIG. 12, a current block is illustrated as if partitioned into subblocks in the same size, which is exemplary only. A partition boundary may be determined based on minimum partition unit information and/or partition position information as described below.

The minimum partition unit information may indicate a minimum size of partition by sample unit. The partition position information may indicate an offset for a partition boundary in a vertical or horizontal direction from a reference position. The reference position may correspond to a position of a left top corner sample of a current block. The partition position information may include a first partition position information and/or a second partition position information according to a direction. The first partition position information indicates an offset for a partition boundary in a vertical (or horizontal) direction from the reference position, and the second partition position information may indicate an offset for a partition boundary in a horizontal (or vertical) direction from the reference position. For instance, the minimum partition unit information, the first partition position information and he second partition position information may be referred to as split_offset_size, split_offset_0 and split_offset_1, respectively.

Minimum partition unit information may indicate an offset size of partition position information. An offset indicated by the partition position information may be represented as a unit of a size indicated by the minimum partition unit information. In this case, a position of a partition boundary may be determined from the product of a value indicated by the minimum partition unit information and a value indicated by the partition position information. For example, if the minimum partition unit information indicates 'a' and the partition position information indicates 'b', the position of the partition boundary may correspond to a sample position of a*b from a reference position. The minimum partition unit information may be referred to as partition offset size information and the partition position information may be referred to as partition offset information.

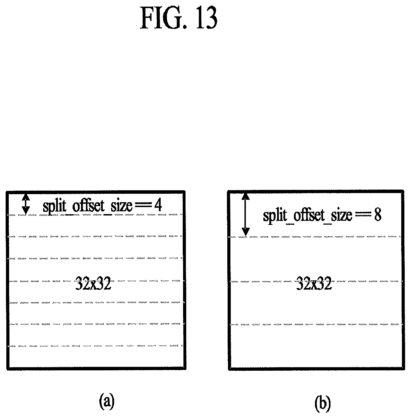

FIG. 13 shows an example of a partition offset based on minimum partition unit information according to the present invention. In the example of FIG. 13, for clarity, a current block is assumed as 32 × 32, by which the present invention is non-limited.

Referring to FIG. 13 (a), exemplarily shown is a case that minimum partition unit information (e.g., split_offset_size) indicates 4. If the minimum partition unit information indicates 4, a partition offset may be determined by 4 sample units and 8 offset units may exist within a current block. In this case, partition position information may indicate 1 to 7.

Referring to FIG. 13 (b), exemplarily shown is a case that minimum partition unit information (e.g., split_offset_size) indicates 8. If the minimum partition unit information indicates 8, a partition offset may be determined by 8 sample units and 4 offset units may exist within a current block. In this case, partition position information may indicate 1 to 3.

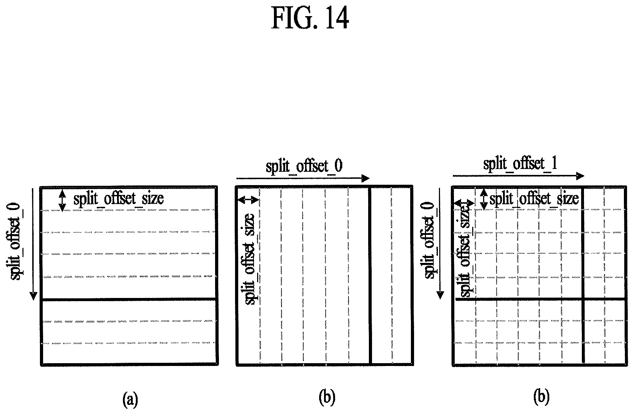

FIG. 14 shows one example of a partition boundary determined according to the present invention. If partition mode information indicates that a current block is not partitioned [First partitioning scheme], minimum partition unit information and partition position information may not be signaled through a bitstream. FIG. 14 (a) exemplarily shows a case that partition mode information indicates that a current block is partitioned into 2 blocks in a vertical direction [Second partitioning scheme], FIG. 14 (b) exemplarily shows a case that partition mode information indicates that a current block is partitioned into 2 blocks in a horizontal direction [Third partitioning scheme], and FIG. 14 (c) exemplarily shows a case that partition mode information indicates that a current block is partitioned into 4 blocks [Fourth partitioning scheme].

Referring to FIG. 14 (a), partition position information may indicate 5 and a partition boundary may be determined by 5 * (value indicated by minimum partition unit information). Like the example shown in FIG. 13, if a current block is 32×32 and minimum partition unit information indicates 4, a partition boundary may be determined as 20.

Referring to FIG. 14 (b), partition position information may indicate 6 and a partition boundary may be determined by 6 * (value indicated by minimum partition unit information). Like the example shown in FIG. 13, if a current block is 32×32 and minimum partition unit information indicates 4, a partition boundary may be determined as 24.

Referring to FIG. 14 (c), a first partition position information and a second partition position information may be signaled through a bitstream. If the first partition position information indicates a vertical partition position and the second partition position information indicates a horizontal partition position, the first partition position information and the second partition position information may indicate 5 and 6, respectively. In this case, a vertical partition boundary may be determined as 5 * (value indicated by the first partition position information) and a horizontal partition boundary may be determined as 6 * (value indicated by the second partition position information).

Or, if the first partition position information indicates a horizontal partition position and the second partition position information indicates a vertical partition position, the first partition position information and the second partition position information may indicate 6 and 5, respectively. In this case, a vertical partition boundary may be determined as 5 * (value indicated by the second partition position information) and a horizontal partition boundary may be determined as 6 * (value indicated by the first partition position information).

Like the example shown in FIG. 13, if a current block is 32×32 and minimum partition unit information indicates 4, a vertical partition boundary may be determined as 20 and a horizontal partition boundary may be determined as 24.

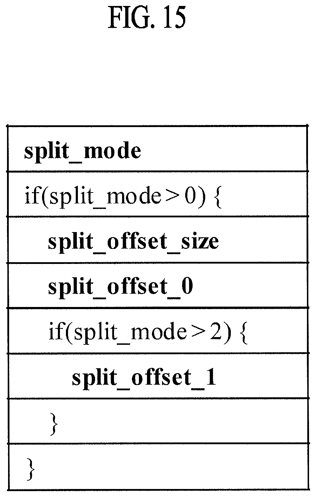

FIG. 15 shows one example of a syntax for a partitioning method according to the present invention. In FIG. 15, exemplarily shown is a syntax for a current block. And, the syntax shown in FIG. 15 may apply recursively/repeatedly. Hence, if a current block is partitioned into a plurality of blocks, the syntax of FIG. 15 exists for each partitioned block. If the partitioned block is additionally partitioned, the syntax of FIG. 15 may exist for the additionally partitioned block.

Referring to FIG. 15, partition mode information (e.g., split_mode) for a current block can be signaled through a bitstream. The decoder obtains partition mode information on the current block from the bitstream and is able to determine a partitioning scheme of the current block. If the partition mode information indicates that the current block is not partitioned [first partitioning scheme], the current block is not further partitioned and other informations on the current block do not exist. In this case, the decoder may determine the current block as a final coding block without partitioning the current block and does not obtain other informations (e.g., minimum partition unit information. partition position information) from the bitstream. In this case, the decoder can perform the operation described in the step S406 of FIG. 4 on the current block. Moreover, for example, if the partition mode information has a value of 0, the partition mode information can indicate that the current block is not partitioned.

If the partition mode information indicates that the current block is partitioned [second partitioning scheme, third partitioning scheme, fourth partitioning scheme], the minimum partition unit information (e.g., split_offset_size) and the partition position information (e.g., split_offset_0 and/or split_offset_1) may be signaled through the bitstream. For example, if the partition mode information has a value greater than 0, the partition mode information can indicate that the current block is partitioned. In this case, the decoder may obtain minimum partition unit information and partition position information from the bitstream, determine a partition boundary, and partition the current block into at least 2 blocks according to the partition boundary.

Particularly, if the partition mode information indicates that the current block is partitioned into 4 blocks [fourth partitioning scheme], the decoder may additionally obtain the second partition position information from the bitstream. In this case, the decoder may determine a partition boundary using the already obtained partition position information and the already obtained second partition position information and partition the current block into 4 blocks according to the determined partition boundary. For example, if the partition mode information has a value (e.g., 3) greater than 2, the partition mode information can indicate that the current block is partitioned into 4 blocks.

As described in the foregoing description, minimum partition unit information (e.g., split_offset_size) may be signaled through a bitstream for every coding block partitioned within a coding tree block or a coding tree. Yet, since it is less probable that a minimum unit of partition will be changed for each coding block, if minimum partition unit information for determining the minimum unit of partition is included in the bitstream for each coding block, it may reduce coding efficiency. To this end, signaling the minimum partition unit information (e.g., split_offset_size) for determining the minimum unit of partition at a higher level may be more efficient than signaling it for a coding tree block or a coding block.

For example, a minimum partition unit may be determined at a sequence or picture level or a slice or tile level. To this end, the minimum partition unit information may be configured to be signaled on a sequence parameter set (SPS), a picture parameter set (PPS) or a slice header. In this case, the decoder obtains the minimum partition unit information (e.g., split_offset_size) from the bitstream through the sequence parameter set (SPS), the picture parameter set (PPS) or the slice header and may not obtain the minimum partition unit information for each coding block. In this case, the syntax shown in FIG. 15 is modified to delete the minimum partition unit information (e.g., split_offset_size), and the minimum partition unit information (e.g., split_offset_size) may be included in the sequence parameter set (SPS), the picture parameter set (PPS) or the slice header.

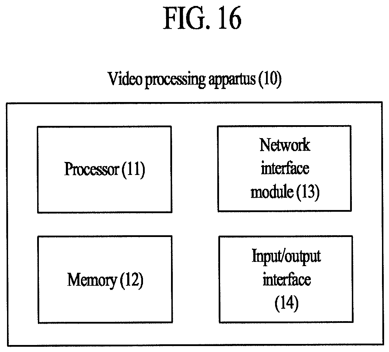

FIG. 16 illustrates a block diagram to which the present invention can be applied. The video processing apparatus may include an encoding apparatus and/or a decoding apparatus of a video signal. For example, the video processing apparatus to which the present invention can be applied may include a mobile terminal such as a smart phone, a mobile equipment such as a laptop computer, a consumer electronics such as a digital TV, a digital video player, and etc.

A memory 12 may store program for processing and controlling by a processor 11, and may store a coded bitstream, a reconstructed image, control information, and the like. Further, the memory 12 may be used as a buffer for various video signals. The memory 12 may be implemented as a storage device such as a ROM (Read Only Memory), RAM (Random Access Memory), EPROM (Erasable Programmable Read Only Memory), EEPROM (Electrically Erasable Programmable Read-Only Memory), a flash memory, SRAM (Static RAM), HDD (Hard Disk Drive), SSD (Solid State Drive), and etc.

The processor 11 controls operations of each module in the video processing apparatus. The processor 11 may perform various control functions to perform encoding/decoding according to the present invention. The processor 11 may be referred to as a controller, a microcontroller, a microprocessor, a microcomputer, or etc. The processor 11 may be implemented as a hardware or a firmware, a software, or a combination thereof. When the present invention is implemented using a hardware, the processor 11 may comprise ASIC (application specific integrated circuit), DSP (digital signal processor), DSPD (digital signal processing device), PLD (programmable logic device), FPGA (field programmable gate array), or the like. Meanwhile, when the present invention is implemented using a firmware or a software, the firmware or software may comprise modules, procedures, or functions that perform functions or operations according to the present invention. The firmware or software configured to perform the present invention may be implemented in the processor 11 or may be stored in the memory 12 and executed by the processor 11.

In addition, the apparatus 10 may optionally include a network interface module (NIM) 13. The network interface module 13 may be operatively connected with the processor 11, and the processor 11 may control the network interface module 13 to transmit or receive wireless/wired signals carrying information, data, a signal, and/or a message through a wireless/wired network. For example, the network interface module 13 may support various communication standards such as IEEE 802 series, 3GPP LTE(-A), Wi-Fi, ATSC (Advanced Television System Committee), DVB (Digital Video Broadcasting), and etc, and may transmit and receive a video signal such as a coded bitstream and/or control information according to the corresponding communication standard. The network interface module 13 may not be included as necessary.

In addition, the apparatus 10 may optionally include an input/output interface 14. The input/output interface 14 may be operatively connected with the processor 11, and the processor 11 may control the input/output interface 14 to input or output a control signal and/or a data signal. For example, the input/output interface 14 may support specifications such as USB (Universal Serial Bus), Bluetooth, NFC (Near Field Communication), serial/parallel interface, DVI (Digital Visual Interface), HDMI (High Definition Multimedia Interface) so as to be connected with input devices such as a keyboard, a mouse, a touchpad, a camera and output devices such as a display.

The embodiments of the present invention described above are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by a subsequent amendment after the application is filed.

The embodiments of the present invention may be implemented by various means, for example, hardware, firmware, software, or a combination thereof. In a hardware implementation, an embodiment of the present invention may be implemented by one or more application specific integrated circuits (ASICs), digital signal processors (DSPs), digital signal processing devices (DSDPs), programmable logic devices (PLDs), field programmable gate arrays (FPGAs), processors, controllers, microcontrollers, microprocessors, etc.

In a firmware or software implementation, an embodiment of the present invention may be implemented in the form of a module, a procedure, a function, etc. Software code may be stored in a memory unit and executed by a processor. The memory unit is located at the interior or exterior of the processor and may transmit and receive data to and from the processor via various known means.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

### INDUSTRIAL APPLICABILITY

The present invention can be applied to a video processing apparatus such as a decoding apparatus or an encoding apparatus.

## Claims

1. A method for decoding a bitstream for a video signal by a decoding device, the method comprising:
obtaining partition mode information indicating a partitioning scheme of a current block from the bitstream, the partitioning scheme including a first scheme of not partitioning the current block, a second scheme of partitioning the current block into 2 blocks in a vertical direction, a third scheme of partitioning the current block into 2 blocks in a horizontal direction, and a fourth scheme of partitioning the current block into 4 blocks in vertical and horizontal directions;
when the partition mode information indicates the first scheme, obtaining prediction mode information for the current block from the bitstream, the prediction mode information indicating whether the current block is coded using an intra prediction mode or an inter prediction mode, and
decoding the current block based on the prediction mode information;
when the partition mode information indicates one of the second to fourth schemes, partitioning the current block into at least 2 blocks, and obtaining partition mode information for each of the at least 2 blocks from the bitstream.

2. The method of claim 1, wherein, when the partition mode information indicates the second scheme, partitioning the current block into the at least 2 blocks comprises:
obtaining minimum partition unit information indicating a minimum partition unit from the bitstream,
obtaining partition position information indicating an offset from a reference position of the current block from the bitstream,
determining a partition boundary based on the minimum partition unit information and the partition position information, and
partitioning the current block into 2 blocks including a top block and a bottom block.

3. The method of claim 2, wherein the partition boundary is determined from a product of a value indicated by the minimum partition unit information and a value indicated by the partition position information.

4. The method of claim 2, wherein the top block and the bottom block have a same horizontal size as the current block.

5. The method of claim 2, wherein the reference position corresponds to a vertical coordinate of a top left corner sample of the current block.

6. The method of claim 1, wherein, when the partition mode information indicates the third scheme, partitioning the current block into the at least 2 blocks comprises:
obtaining minimum partition unit information indicating a minimum partition unit from the bitstream,
obtaining partition position information indicating an offset from a reference position of the current block from the bitstream,
determining a partition boundary based on the minimum partition unit information and the partition position information, and
partitioning the current block into 2 blocks including a left block and a right block.

7. The method of claim 6, wherein the partition boundary is determined from a product of a value indicated by the minimum partition unit information and a value indicated by the partition position information.

8. The method of claim 6, wherein the reference position corresponds to a vertical coordinate of a top left corner sample of the current block.

9. The method of claim 1, wherein, when the partition mode information indicates the fourth scheme, partitioning the current block into the at least 2 blocks comprises:
obtaining minimum partition unit information indicating a minimum partition unit from the bitstream,
obtaining a first partition position information indicating a first offset from a reference position of the current block from the bitstream,
determining a first partition boundary based on the minimum partition unit information and the first partition position information,
obtaining a second partition position information indicating a second offset from the reference position of the current block from the bitstream,
determining a second partition boundary based on the minimum partition unit information and the second partition position information, and
partitioning the current block into 4 blocks based on the first partition boundary and the second partition boundary.

10. The method of claim 9, wherein the first partition boundary is determined from a product of a value indicated by the minimum partition unit information and a value indicated by the first partition position information, and wherein the second partition boundary is determined from a product of the value indicated by the minimum partition unit information and a value indicated by the second partition position information.

11. The method of claim 9, wherein the reference position includes vertical and horizontal coordinates of a top left corner sample of the current block.

12. The method of claim 1, wherein, when the prediction mode information indicates that the current block is coded in the intra prediction ode, decoding the current block comprises:
partitioning the current block into at least one transform block,
obtaining a prediction value by performing intra prediction on the at least one transform block, and
reconstructing the at least one transform block based on the obtained prediction value.

13. The method of claim 1, wherein, when the prediction mode information indicates that the current block is coded in the inter prediction ode, decoding the current block comprises:
partitioning the current block into at least one prediction block,
obtaining inter prediction information on the at least one prediction block,
obtaining a prediction value by performing inter prediction based on the obtained inter prediction information,
partitioning the current block into at least one transform block,
obtaining residual information on the at least one transform block, and
reconstructing the current block based on the obtained prediction value and the obtained residual information.

14. The method of claim 1, wherein, when the partition mode information indicates one of the second to fourth schemes, the method further comprises recursively performing the decoding or the partitioning on each of the at least 2 blocks based on the partition mode information on each of the at least 2 blocks.

15. A decoding device configured to decode a bitstream for a video signal, the decoding device comprising:
a memory; and
a processor operatively connected to the memory, wherein the processor is configured to:
obtain partition mode information indicating a partitioning scheme of a current block from the bitstream, the partitioning scheme including a first scheme of not partitioning the current block, a second scheme of partitioning the current block into 2 blocks in a vertical direction, a third scheme of partitioning the current block into 2 blocks in a horizontal direction, and a fourth scheme of partitioning the current block into 4 blocks in vertical and horizontal directions;
when the partition mode information indicates the first scheme, obtain prediction mode information for the current block from the bitstream, the prediction mode information indicating whether the current block is coded using an intra prediction mode or an inter prediction mode, and
decode the current block based on the prediction mode information; and
when the partition mode information indicates one of the second to fourth schemes, partition the current block into at least 2 blocks, and obtain partition mode information for each of the at least 2 blocks from the bitstream.
